# EUROPEAN PATENT APPLICATION

(11) **EP 2 966 882 A1**
(43) Date of publication of application: **13.01.2016**
(21) Application number: 15175487.6
(22) Date of filing: 06.07.2015
(51) Int. Cl.: H04S 7/00, H04R 1/32, H04R 1/40, G06F 3/01

(54) **BEAM DIRECTION SETTING DEVICE AND BEAM DIRECTION SETTING SYSTEM**

(30) Priority: 07.07.2014 JP 2014139672
(71) Applicant: YAMAHA CORPORATION, Hamamatsu-shi Shizuoka 430-8650 (JP)
(72) Inventor: OHASHI, Noriyuki, Hamamatsu-shi, Shizuoka 430-8650 (JP)
(74) Representative: Carstens, Dirk Wilhelm

(57) **Abstract**

A beam direction setting device includes a communication unit configured to communicate with a speaker system configured to output a sound to a predetermined direction as a beam, a display unit configured to display a position of the speaker system, a reception unit configured to receive a designation of a listening position relative to the speaker system, and an acquisition unit configured to acquire information indicating a beam direction based on a relationship between the listening position received by the reception unit and the position of the speaker system displayed on the display unit. The display unit further displays the listening position and the beam direction.

## Description

### CROSS-REFERENCE TO RELATED APPLICATION

The present application claims priority from Japanese Application JP2014-139672, the content of which is hereby incorporated by reference into this application.

### BACKGROUND OF THE INVENTION

### 1. Field of the Invention

The present invention relates to a beam direction setting device and a beam direction setting system.

### 2. Description of the Related Art

Hitherto, there is known a technology in which a sound is converted into a beam to be output by using a speaker array obtained by arraying a plurality of speakers. For example, Japanese Patent Application Laid-open No. 2006-258442discloses a system in which a position of a remote control is detected to form a focal point of the beam in the position of the remote control.

Further, Japanese Patent Application Laid-open No.2007-68060 proposes a system in which a position of a speaker is detected by using a sensor to conduct such a setting that a beam is directed to the position of the speaker.

### SUMMARY OF THE INVENTION

However, each of the related-art systems is automatically set so that the beam is directed to a specific position that has been detected, and does not provide an idea that the beam is set to be directed to an arbitrary position desired by a user.

Note that, also in the related-art systems, for example, a manual setting of a direction of the beam is allowed by displaying an output direction (angle) of the beam on a display unit of a device main body and incrementing/decrementing an angle by using the remote control. However, even in this case, only by displaying the angle as a numerical value, it is difficult for the user to intuitively grasp the output angle. Further, the display unit of the main body formed of LEDs or the like exhibits poor visibility, which may make it difficult to visually observe the numerical value from a listening position. In addition, the value is incremented/decrementedby each predetermined angle in the setting using the remote control, which is inconvenient when the value is to be changed greatly.

Therefore, an object of one or more embodiments of the present invention is to provide a beam direction setting device capable of setting a beam direction in an arbitrary position desired by a user.
(1) In one or more embodiments of the present invention, a beam direction setting device includes a communication unit configured to communicate with a speaker system configured to output a sound to a predetermined direction as a beam, a display unit configured to display a position of the speaker system, a reception unit configured to receive a designation of a listening position relative to the speaker system, and an acquisition unit configured to acquire information indicating a beam direction based on a relationship between the listening position received by the reception unit and the position of the speaker system displayed on the display unit. The display unit further displays the listening position and the beam direction.
(2) In the beam direction setting device according to (1), the display unit displays a listening position image indicating the listening position and a beam direction image indicating the beam direction so as to be superimposed on a room image indicating a room having a square shape and a speaker system image indicating the speaker system arranged within the room image.
(3) In the beam direction setting device according to (2), the display unit displays a line extending to a front direction of the speaker system image.
(4) In the beam direction setting device according to (1), the display unit displays a semicircular shape formed with the speaker system as a center thereof.
(5) In the beam direction setting device according to (2), the information indicating the beam direction indicates an angle of the listening position image relative to a center line extending to a front direction from a center of the speaker system image.
(6) In the beam direction setting device according to (5), the display unit displays the angle.
(7) In the beam direction setting device according to one of (1) to (6), the display unit and the reception unit are formed as a touch panel.
(8) In the beam direction setting device according to one of (1) to (7), the acquisition unit acquires information based on a distance between the listening position received by the reception unit and the position of the speaker system displayed on the display unit, and the display unit displays the information based on the distance between the listening position and the speaker system.
(9) In the beam direction setting device according to one of (1) to (8), the reception unit receives the designation of a plurality of listening positions, the acquisition unit acquires the information indicating the beam direction for each of the received plurality of listening positions, and the display unit displays each of the plurality of listening positions and the beam directions.
(10) In one or more embodiments of the present invention, a beam direction setting system includes a speaker system and a beam direction setting device. The speaker system includes a communication unit configured to communicate with the beam direction setting device, a speaker array including a plurality of speakers, and a processing unit configured to cause the speaker array to output a sound converted into a beam. The beam direction setting device includes a communication unit configured to communicate with the speaker system, a display unit configured to display a position of the speaker system, a reception unit configured to receive a designation of a listening position relative to the speaker system, and an acquisition unit configured to acquire information indicating a beam direction based on a relationship between the listening position received by the reception unit and the position of the speaker system displayed on the display unit. The display unit further displays the listening position and the beam direction. The processing unit of the speaker system sets a direction of the beam output by the speaker array based on the information indicating the beam direction.
(11) In the beam direction setting system according to (10), the display unit displays a listening position image indicating the listening position and a beam direction image indicating the beam direction so as to be superimposed on a room image indicating a room having a square shape and a speaker system image indicating the speaker system arranged within the room image.
(12) In the beam direction setting system according to (11), the display unit displays a line extending to a front direction of the speaker system image.
(13) In the beam direction setting system according to (10), the display unit displays a semicircular shape formed with the speaker system as a center thereof.
(14) In the beam direction setting system according to (11), the information indicating the beam direction indicates an angle of the listening position image relative to a center line extending to a front direction from a center of the speaker system image.
(15) In the beam direction setting system according to (14), the display unit displays the angle.
(16) In the beam direction setting system according to one of (10) to (15), the acquisition unit acquires information based on a distance between the listening position received by the reception unit and the position of the speaker system displayed on the display unit, and the processing unit sets a volume of the beam based on the information based on the distance.
(17) In the beam direction setting system according to one of (10) to (16), the acquisition unit acquires information based on a distance between the listeningposition received by the reception unit and the position of the speaker system displayed on the display unit, and the processing unit sets a focal point of the beam based on the information based on the distance.
(18) In the beam direction setting system according to one of (10) to (17), the reception unit receives the designation of a plurality of listening positions, and the acquisition unit acquires the information indicating the beam direction for each of the received plurality of listening positions, the display unit displays each of the plurality of listening positions and the beam directions; and the processing unit causes the speaker array to output a plurality of beams, and sets the direction of each of the plurality of beams based on the information indicating each of the beam directions.
(19) In the beam direction setting system according to one of (10) to (18), the speaker system includes a mixing unit configured to mix audio signals for a plurality of channels, and the processing unit causes the speaker array to output the beam by supplying the audio signals mixed by the mixing unit to each of the plurality of speakers.

### BRIEF DESCRIPTION OF THE DRAWINGS

FIG. 1 is a block diagram for illustrating a configuration of a beam direction setting system.
FIG. 2 is a flowchart for illustrating operations of a speaker system and a terminal.
FIG. 3A and FIG. 3B are each an example of a beam direction setting screen.
FIG. 4A and FIG. 4B are diagrams for illustrating an example in which a user slides a touched position.
FIG. 5A and FIG. 5B are diagrams for illustrating a mode for receiving a designation operation for a volume on the beam direction setting screen.
FIG. 6A and FIG. 6B are diagrams for illustrating a mode for changing only a listening position and the beam direction with the volume fixed.
FIG. 7A and FIG. 7B are diagrams for illustrating a mode for changing a focus position.
FIG. 8A and FIG. 8B are diagrams for illustrating a beam direction setting screen according to a modification example of the present invention.
FIG. 9 is a diagram for illustrating a setting screen displayed when a setting of the beam direction is received for each content.

### DETAILED DESCRIPTION OF THE INVENTION

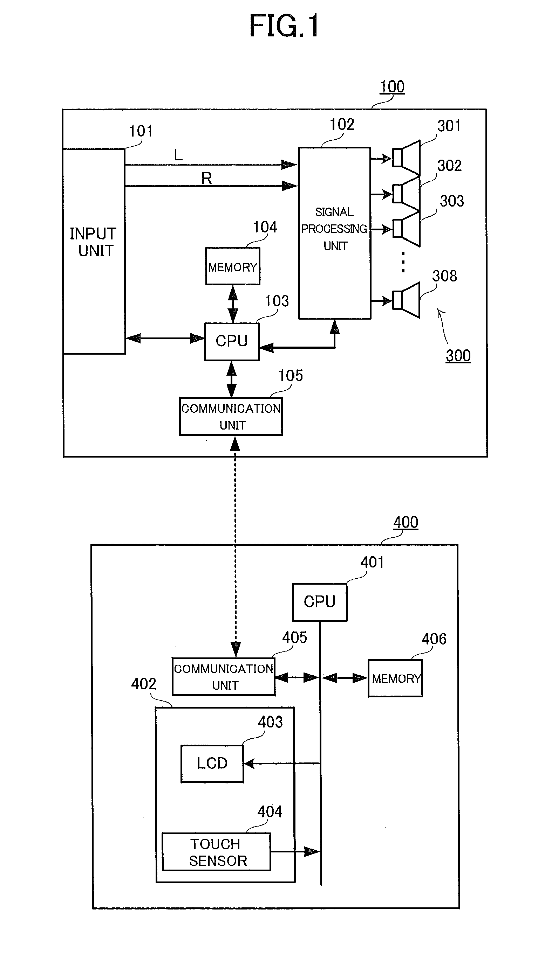

FIG. 1 is a block diagram for illustrating a configuration of a beam direction setting system including a beam direction setting device according to the present invention.

The beam direction setting system includes a speaker system 100 and a terminal 400. The speaker system 100 is placed in a predetermined position (for example, forward of a listening position) within a room. The terminal 400 is, for example, a smartphone, and corresponds to the beam direction setting device according to the present invention.

The speaker system 100 includes an input unit 101, a signal processing unit 102, a CPU 103, a memory 104, a communication unit 105, and a speaker array 300.

The speaker array 300 is formed by arraying a plurality of speakers (in this example, eight speakers; a speaker 301, a speaker 302, a speaker 303, a speaker 304, a speaker 305, a speaker 306, a speaker 307, and a speaker 308).

The input unit 101 includes an interface for inputting an audio signal such as HDMI (trademark) or S/PDIF, and receives an input of the audio signal from an external content reproducing device. Note that, the input unit 101 is not limited to an example of inputting the audio signal through a physical cable, and may employ a mode for inputting the audio signal through wireless communications. The audio signals for, for example, 2 channels (stereo channel) are input to the input unit 101. The input unit 101 outputs the audio signal for each channel to the signal processing unit 102. However, in regard to a number of channels of the audio signals input to the input unit 101, a monaural channel may be used, or a multi-channel (for example, 5.1 channels or 7.1 channels) may be used.

The memory 104 stores a program for operating the speaker system 100. The CPU 103 reads the program stored in the memory 104, and controls the input unit 101, the signal processing unit 102, and the communication unit 105.

The signal processing unit 102 corresponds to a processing unit according to the present invention, and executes predetermined processing (for example, processing such as volume adjustment) for each audio signal input from the input unit 101 in accordance with control of the CPU 103. Further, the signal processing unit 102 distributes the input audio signal to the respective speakers of the speaker array 300 in accordance with the control of the CPU 103. In this example, 2-channel audio signals are input, and hence the signal processing unit 102 mixes the 2-channel audio signals down into a monaural signal, and then distributes the monaural signal to the respective speakers (that is, the signal processing unit 102 corresponds to a mixing unit according to the present invention) .

Sounds output from the respective speakers of the speaker array 300 are emphasized in positions having an identical phase, to thereby be output as a beam. The signal processing unit 102 can direct the beam to an arbitrary direction by controlling a delay amount of each audio signal in accordance with the control of the CPU 103. Specifically, for example, the beam of the sound substantially parallel with a direction in which the respective speakers are arrayed is realized by setting the delay amount of each audio signal input to the respective speakers of the speaker array 300 to 0. In other words, the beam of the sound is formed so as to have a wavefront substantially parallel with the direction in which the respective speakers are arrayed. Then, through the control of the delay amount of each audio signal as described above, it is possible to arbitrarily change an angle of the wavefront relative to the direction in which the respective speakers are arrayed.

The communication unit 105 uses an antenna (not shown) for wireless communications to transmit/receive various kinds of information to/from the terminal 400 in accordance with the control of the CPU 103. The wireless communications may have any standards (for example, standards such as Bluetooth or Wi-Fi may be used). Further, the wired communications, for example, USB may be used instead of the wireless communications.

The CPU 103 transmits setting information for the signal processing unit 102 to the terminal 400 via the communication unit 105. The setting information includes, for example, information indicating a beam direction. The beam direction is expressed by, for example, an angle value (numerical value) that takes a positive value in the clockwise direction and a negative value in the counterclockwise direction assuming that a front of the speaker system 100 is 0°. Further, the setting information may include volume information.

The terminal 400 includes a CPU 401, a touch panel 402, a communication unit 405, and a memory 406. The touch panel 402 includes an LCD 403 serving as a display unit and a touch sensor 404 serving as a reception unit configured to receive an input of a user's operation. The CPU 401, the LCD 403, the touch sensor 404, and the communication unit 405 are connected to one another through a bus. Note that, in this embodiment, a touch panel in which the reception unit (touch sensor 404) and the display unit (LCD 403) are integrated is described, but the reception unit and the display unit may be provided separately from each other.

The memory 406 stores programs (OS and application programs) for operating the terminal 400. The CPU 401 reads the program stored in the memory 406, and controls the LCD 403, the touch sensor 404, and the communication unit 405. For example, the CPU 401 changes contents to be displayed on the LCD 403 based on the user's touch operation received by the touch sensor 404.

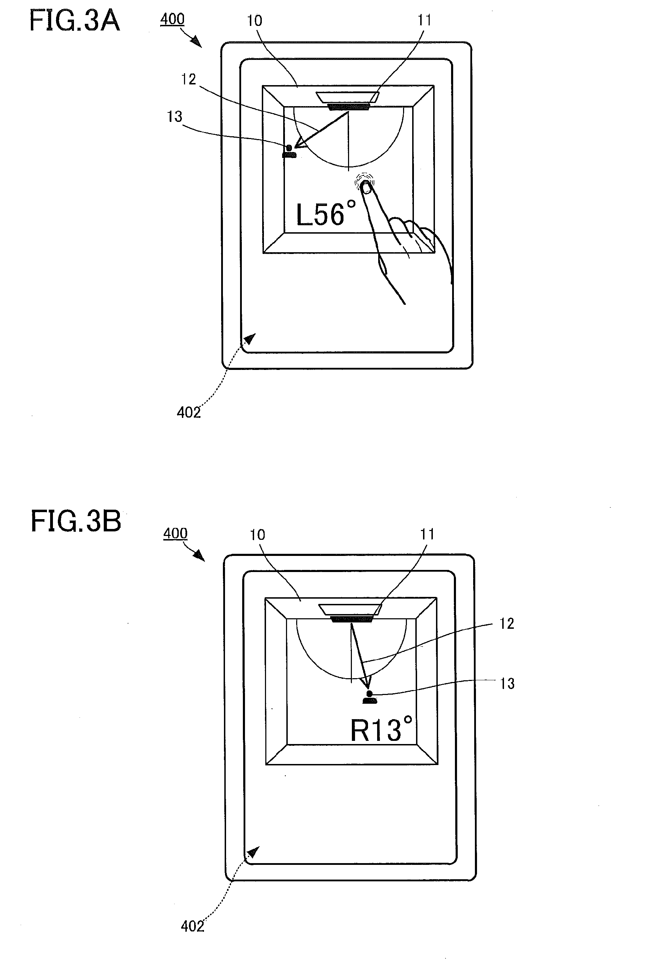

When receiving an instruction to read the application program for realizing the beam direction setting system, the CPU 401 reads the application program from the memory 406. Then, the CPU 401 displays a beam direction setting screen (for example, screen illustrated in FIG. 3A) on the LCD 403, and receives the input of the user's operation.

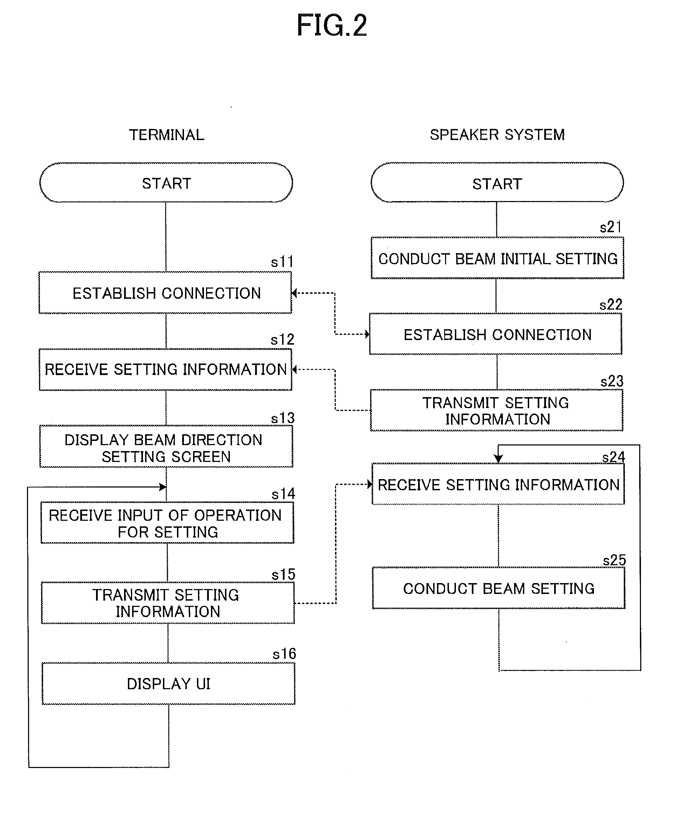

FIG. 2 is a flowchart for illustrating operations of the speaker system 100 and the terminal 400. First, when powered on, the speaker system 100 conducts abeaminitial setting (s21). In the beam initial setting, the CPU 103 conducts processing for setting the beam direction set before the power on for the signal processing unit 102. The previously set beam direction is stored in the memory 104 as the setting information. The CPU 103 reads the setting information from the memory 104 to set the setting information for the signal processing unit 102. Note that, at an initial startup, the beam direction is set to, for example, 0° as a front direction of the speaker system 100.

Then, when the terminal 400 starts up the application program, the CPU 401 of the terminal 400 transmits a connection inquiry to the speaker system 100 via the communication unit 405, and establishes a connection to the speaker system 100 (s11 and s22). However, in a case where a communication connection has already been established between the terminal 400 and the speaker system 100 when the application program is not started up, it is not necessary to establish a new connection.

When the communication connection is established, the speaker system 100 transmits the setting information read from the memory 104 to the terminal 400 (s23). When receiving the setting information from the speaker system 100 (s12), the terminal 400 displays the beam direction setting screen on the LCD 403 (touch panel 402) based on the setting information (s13).

FIG. 3A is an example of the beam direction setting screen. On the beam direction setting screen, there are displayed a room image 10 corresponding to a bird' s eye view of a room having a square shape, and a speaker system image 11 corresponding to the speaker system 100 in a front of the room image 10.

The CPU 401 displays the beam direction in a room image based on the setting information received from the speaker system 100. In this example, an arrow 12 is displayed as an image indicating the beam direction. The arrow 12 may have a fixed length, but when the setting information includes the volume information, the length of the arrow 12 may be changed based on the volume information. For example, a longer arrow is set as the volume becomes larger by setting the length of the arrow 12 to 0 when a volume is 0 and setting the length of the arrow 12 to match with a length of the room image 10 when the volume is maximum.

Further, the CPU 401 displays a listening position image 13 near a tip of the arrow 12. The listening position image 13 is, for example, an image of a human figure as illustrated in FIG. 3A. Then, the CPU 401 displays the angle from the front as the beam direction. In this example, the information of +56° is received as the information indicating the beam direction. When a positive value is received, the beam is directed to a left side of the speaker system image 11 when viewed from the listening position, and hence the CPU 401 displays "L56°".

When the user touches a predetermined position, the CPU 401 receives a designation of the listening position via the touch panel 402 (s14). That is, a position touched by the user on the room image 10 is received as the listening position. The CPU 401 calculates an angle of the touched position relative to the front of the speaker system 100 from coordinates of the touched position and center coordinates of the speaker system image 11. The calculated angle is used as a direction in which the beam is to be output. The CPU 401 transmits the calculated angle value to the speaker system 100 as the information indicating the beam direction (s15). Further, the CPU 401 changes and displays the beam direction based on the calculated angle value (s16). Accordingly, the CPU 401 functions as a calculation unit according to the present invention.

For example, as illustrated in FIG. 3A, when the user touches a position slightly to the right side of the front of the speaker system image 11, and when the angle of the touched position relative to the front of the speaker system image 11 is 13° in the counterclockwise direction, -13° is calculated as the direction (angle value) in which the beam is to be output. Therefore, as illustrated in FIG. 3B, the CPU 401 changes the arrow 12 to a direction of 13° to the right side when viewed from the listening position, and displays "R13°". Further, the CPU 401 moves the position of the listening position image 13 to a tip of the new arrow 12.

Subsequently, when receiving the information indicating the beam direction from the terminal 400 (S24), the CPU 103 of the speaker system 100 sets the new beam direction for the signal processing unit 102 based on the received information indicating the beam direction. In the example of FIG. 3B, the information of -13° is received as the direction (angle value) in which the beam is to be output, and hence the beam direction is set to the direction of 13° to the right side when viewed from the listening position.

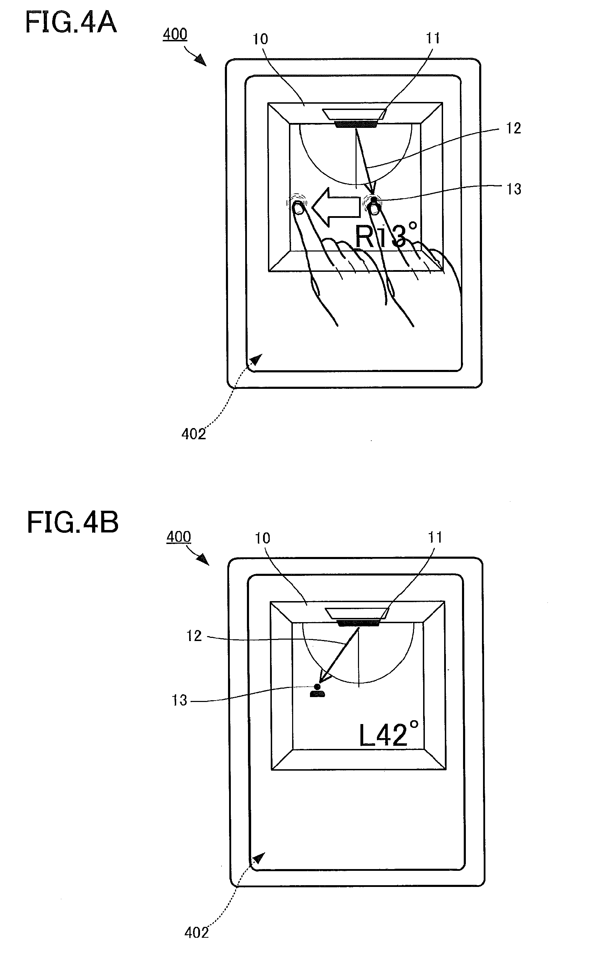

Note that, it is desired that processing for receiving the designation of the listening position (s14), processing for displaying the beam direction and the listening position (s15), and processing for transmitting/receiving the information indicating the beamdirection (s15 and s24) be continuously executed. Accordingly, for example, as illustrated in FIG. 4A, in a case where the user slides his/her finger on the touch panel 402 while touching the touch panel 402, the display of the beam direction and the listening position is changed so as to follow a motion of the finger, and the beam direction output from the speaker system 100 is changed. Then, as illustrated in FIG. 4B, a position in which the user releases the finger is designated as a final listening position. In this example, the position in which the user releases the finger indicates the direction of 42° to the left side when viewed from the listening position. Thus, the CPU 401 transmits the information of +42° to the speaker system 100 as the information indicating the beam direction, and directs the arrow 12 to the left side of the speaker system image 11 by 42° when viewed from the listening position, to display the listening position image 13 and display "L42°". The speaker system 100 sets the beam direction as the direction of 42° to the left side when viewed from the listening position.

Note that, as described above, the setting information may include the volume information. In this case, the CPU 401 receives a designation operation for the volume on the beam direction setting screen. For example, assuming that the volume is 0 when the position of the speaker system image 11 is touched, the CPU 401 receives a designation of a larger volume as a position farther apart from the speaker system image 11 is touched. That is, the volume information corresponds to information based on a distance between the position of the speaker system and the listening position.

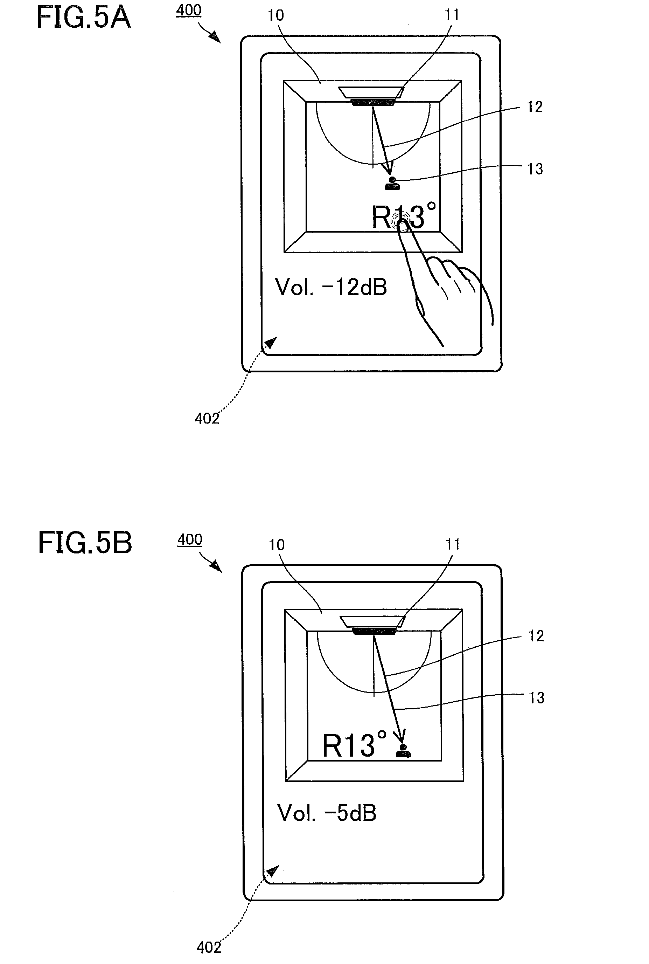

For example, as illustrated in FIG. 5A, in a case where the current volume is "-12 dB", when the user touches a position farther apart from the speaker system image 11 than the current position of the listening position image 13, the CPU 401 receives the designation operation for the volume of "-5 dB" as a volume larger than the current volume. Then, the CPU 401 moves the position of the listening position image 13 to the position in which the touch operation has been received, and also displays the arrow 12 so as to extend to the listening position. In addition, the CPU 401 transmits the received volume information (in this example, -5 dB) to the speaker system 100. The speaker system 100 changes the volume of the beam based on the received volume information.

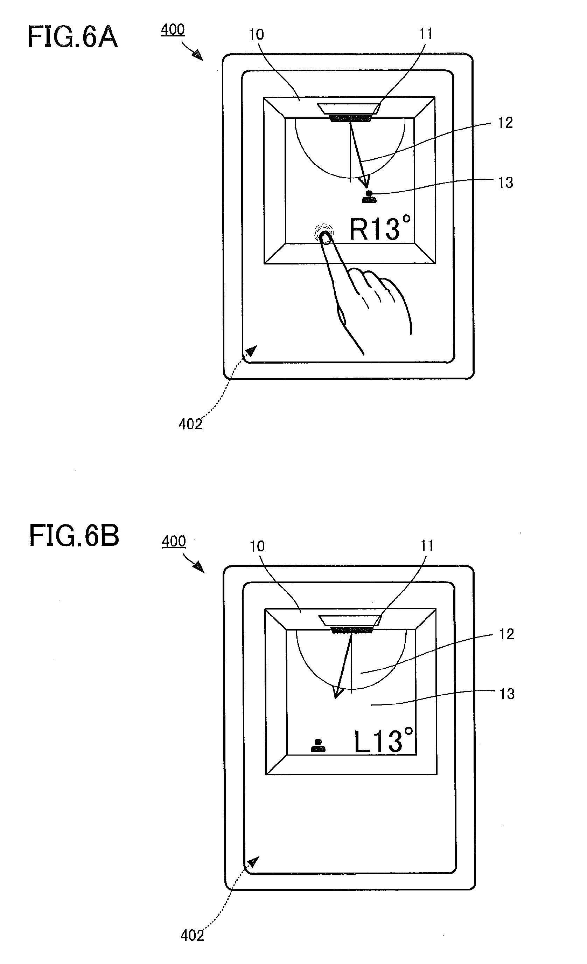

However, as illustrated in FIG. 6A and FIG. 6B, a mode for changing only the listening position and the beam direction with the volume fixed without changing the length of the arrow 12 even when the user touches the position farther apart from the speaker system image 11 than the current position of the listening position image 13 may be employed. In this case, the CPU 401 transmits only the information indicating the beam direction to the speaker system 100 as the setting information.

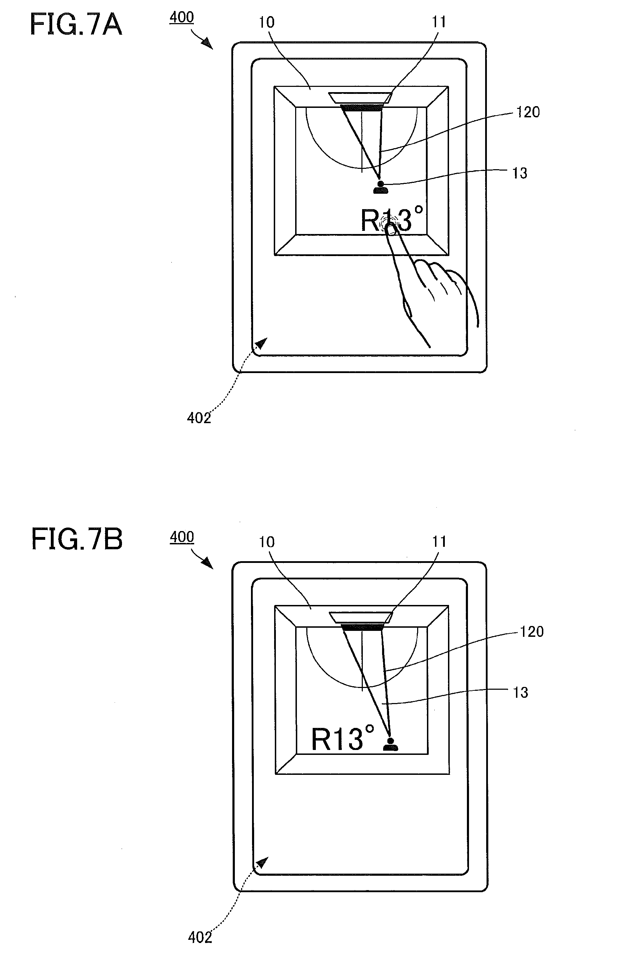

Further, as illustrated in FIG. 7A and FIG. 7B, a mode for setting a focal point of the beam in accordance with the position touched by the user may be employed. In this example, an image 120 having such a triangular shape that the beam is focused in a focus position is displayed in place of the arrow 12. Specifically, the focus position corresponds to one point obtained by controlling the delay amount of each audio signal to cause the wavefront of the sound output from the each speaker of the speaker array 300 to converge in the one point.

The speaker system 100 controls the delay amounts of the audio signals so that distances between a predetermined focus position and the respective speakers of the speaker array 300 become virtually the same, which allows sounds to reach the focus position in a concentrated manner.

As illustrated in FIG. 7A and FIG. 7B, the CPU 401 of the terminal 400 moves the position of the listening position image 13 to the position in which the touch operation has been received, and also changes a position of a vertex of the image 120 to the listening position to display the position. In addition, the CPU 401 transmits the information (information based on the distance between the position of the speaker system and the listening position) relating to the received listening position to the speaker system 100. The speaker system 100 changes the focus position of the beam to the listening position based on the received information. For example, assuming that the distance is set to 0 when the position of the speaker system image 11 is touched and that the farthest position (for example, 10 m, which varies depending on capability of the speaker system) of the focal points that can be set by the speaker system 100 is set when the farthest position from the speaker system image 11 in the room image 10 is touched, such a setting is made that the value of the distance becomes larger as the position farther apart from the speaker system image 11 is touched and that the position of the focal point becomes farther apart from the speaker system 100.

Accordingly, the focus position is changed to the listening position designated by the user, which allows the sounds to reach the user present in the listening position in a concentrated manner. Note that, the volume may be changed as well when the focus position of the beam is changed. Further, as described above, also in the configuration for setting the focal point of the beam in accordance with the position touched by the user, the arrow 12 described above may be displayed in place of the image 120 having a triangular shape. Note that, the respective images such as the listening position image 13 and the speaker system image 11, the arrow 12, the image 120 having a triangular shape, and the like, which are used in the above description, are merely examples, and another image may be used.

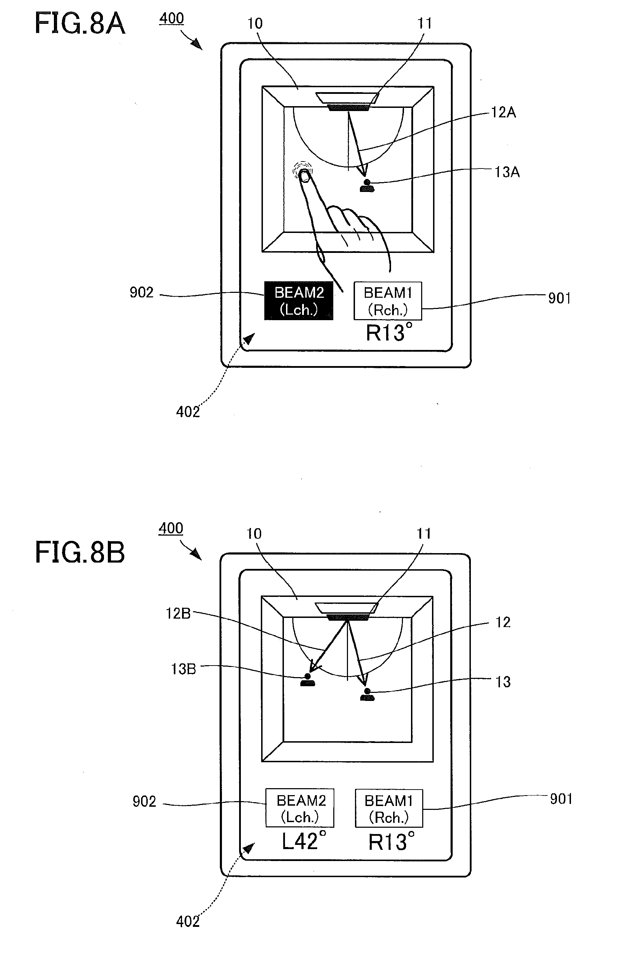

FIG. 8A and FIG. 8B are diagrams for illustrating a beam direction setting screen according to a modification example of the present invention. In this example, a setting for a plurality of beam directions is received. In this example, an icon for receiving the designation of the beam is displayed below the room image 10. Here, an icon 901 for a beam 1 and an icon 902 for a beam 2 are displayed, and correspond to a beam for an R channel and a beam for an L channel, respectively. In the examples illustrated in FIG. 1 to FIG. 6B, the signal processing unit 102 of the speaker system 100 mixes the stereo-channel audio signals down into a monaural signal and distributes the monaural signal to the respective speaker systems of the speaker array 300, but in Modification Example 1 illustrated in FIG. 8A and FIG. 8B, the signal processing unit 102 distributes the stereo-channel audio signals to the respective speaker systems of the speaker array 300. Accordingly, the beam for the L channel and the beam for the R channel are output from the speaker array 300.

As illustrated in FIG. 8A, when the user touches each icon for the beam, the CPU 401 receives the setting for a direction of the beam associated with each icon. In this example, the user touches the icon 902 for the beam 2, and hence the beam direction of the beam 2 (L channel) is ready to be received. When the user touches a position on the left side of the front of the speaker system image 11, the CPU 401 calculates the direction (angle value) in which the beam for the L channel is to be output. In this example, +42° is calculated, and hence, as illustrated in FIG. 8B, the CPU 401 displays an arrow 12B corresponding to the beam for the L channel as the direction of 42° to the left side when viewed from the listening position, and displays "L42°" in a bottom side of the screen. In addition, the CPU 401 displays the position of a listening position image 13B at a tip of the new arrow 12B.

Note that, in this example, two listening position images of a listening position image 13A and the listening position image 13B are displayed, but the number of listening position images may be only one. For example, the listening position image may be displayed only in the position corresponding to the beam (arrow 12A) for the R channel, or the listening position image may be displayed only in the position corresponding to the beam (arrow 12B) for the L channel. Further, a mode for averaging the beam directions (angle values) corresponding to the respective listening positions to display the listening position image in an intermediate position of the respective beams may be employed.

In this manner, in the beam direction setting system, even when the plurality of beams are output, the listening position and the beam direction are displayed on the touch panel 402, which allows the user to easily designate the listening position and to easily set the beam direction.

Note that, when the audio signals for more channels are input, more icons for the beams may be displayed to receive a setting of the beam direction for each channel, but the signal processing unit 102 may mix the audio signals down into the number (two in the example of FIG. 8A and FIG. 8B) of beams and the setting of the beam direction for each channel of the mixed-down audio signal is received.

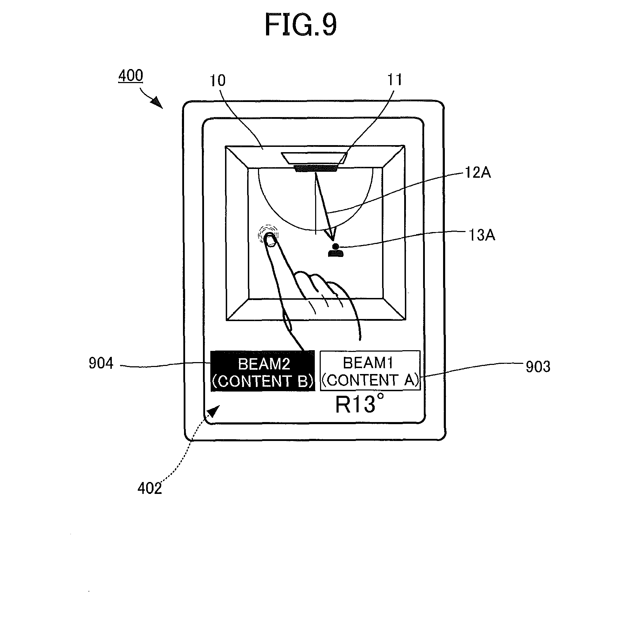

Further, a mode for receiving the setting of the beam direction for each content by configuring the input unit 101 to input the audio signals for a plurality of contents and the signal processing unit 102 to output a different beam for each content may be employed. In this case, for example, as illustrated in FIG. 9, a mode for receiving the respective settings of the beam directions for a beam for a content A and a beam for a content B by displaying an icon 903 for the beam 1 for the content A and displaying an icon 904 for the beam 2 for the content B may be employed. Accordingly, even when a plurality of listeners are listening to different continents in positions different from one another, an appropriate setting of the beam direction can be made for each user.

Note that, the beam referred to in the present invention corresponds to a state in which directivity of the sound is controlled and output in a predetermined direction, and a mode for causing the output sound to propagate in parallel or to be focused in a predetermined focus position may be included. Modes that enable the control of the direction are all included in a technical scope of the present invention.

Note that, a beam direction setting device according to a one embodiment of the present invention includes a communication unit configured to communicate with the speaker system configured to output a sound to a predetermined direction as a beam. Further, the beam direction setting device includes a display unit configured to display the position of the speaker system, a reception unit configured to receive the designation of the listening position relative to the speaker system, and a calculation unit configured to calculate the information indicating the beam direction based on a relationship between the listening position received by the reception unit and the position of the speaker system displayed on the display unit. Further, the calculation unit of the beam direction setting device transmits the information indicating the beam direction to the speaker system via the communication unit, and displays the listening position and the beam direction on the display unit.

In this manner, the position of the speaker system is displayed on the display unit of a terminal (for example, television set, PC, or smartphone) other than a main body, and the terminal is used to receive the designation of the listening position. For example, the image such as the bird's eye view of the room having a square shape is displayed with the image of the speaker systembeing arranged forward of the room, and the designation of the listening position is received in any one of positions within the square shape. Then, the calculation unit of the terminal calculates the direction (information indicating the beam direction) in which the beam is to be output based on the relationship between the position of the speaker system and the listening position. For example, when the listening position is designated in the position of 45° to the left side with the front direction of the speaker system set as 0°, +45° is calculated as the information indicating the beam direction assuming that a positive value indicates a clockwise angle. The terminal transmits the calculated information indicating the beam direction to the speaker system, and displays the received listening position and the beam direction (for example, image of the arrow) on the display unit. The speaker system that has received the information on the beam direction sets the beam direction based on the information on the beam direction.

Accordingly, the user can intuitively set the beam direction in an arbitrary position desired thereby. Further, a television set, a PC, a smartphone, or the like is higher in visibility than the display unit of the main body, and is easy to receive the setting. In particular, when the display unit and the reception unit are integrated by the touchpanel, it is possible to set the beamdirection more intuitively.

Note that, it is preferred that the calculation unit transmit the information based on the distance between the listening position received by the display unit and the position of the speaker system displayed on the display unit to the speaker system via the communication unit, to display the information based on the distance between the listening position and the speaker system on the display unit.

The distance between the listening position and the speaker canbe expressed by, for example, the length of the arrow. The speaker system sets the volume based on the received information. A volume impression perceived by the user is maintained at a constant level by lowering the volume when the distance between the listening position and the speaker system is near and raising the volume when the distance between the listening position and the speaker system is far.

Further, a mode for configuring the speaker system to set the focus position based on the information relating to the received distance may be employed. Accordingly, the focus position is changed to the listening position designated by the user, which allows the sounds to reach the user present in the listening position in a concentrated manner.

Further, a mode for displaying the beam direction on the display unit by configuring the reception unit to receive the designation of a plurality of listening positions and the calculation unit to transmit the information indicating the beam direction to the speaker system via the communication unit for each of the received listening positions may be employed.

In this manner, each of the listening positions and the beam directions are displayed on the display unit of the terminal, which allows the user to easily designate the listening position and to easily set the beam direction even when a plurality of beams are output.

Note that, the speaker system may include mixing unit configured to mix audio signals for a plurality of channels, and may be configured to supply the audio signals mixed by the mixing unit to the respective speakers, to thereby output the beam to a speaker array.

According to the present invention, for example, it is possible to set the beam direction in the arbitrary position desired by the user.

Note that, an exemplary case where the information indicating the beam direction is calculated by the beam direction setting device is described above, but the beam direction setting device may be configured to acquire a result of calculation of the beam direction, which is conducted outside of the beam direction setting device by, for example, a speaker system or an external server.

While the invention has been described with respect to a limited number of embodiments, those skilled in the art, having benefit of this disclosure, will appreciate that other embodiments can be advised which do not depart from the scope of the invention as described therein. Accordingly, the scope of the invention should be limited only by the claims.

## Claims

1. A beam direction setting device, comprising:
a communication unit configured to communicate with a speaker system configured to output a sound to a predetermined direction as a beam;
a display unit configured to display a position of the speaker system;
a reception unit configured to receive a designation of a listening position relative to the speaker system; and
an acquisition unit configured to acquire information indicating a beam direction based on a relationship between the listening position received by the reception unit and the position of the speaker system displayed on the display unit,
wherein the display unit further displays the listening position and the beam direction.

2. The beam direction setting device according to claim 1, wherein the display unit displays a listening position image indicating the listening position and a beam direction image indicating the beam direction so as to be superimposed on a room image indicating a room having a square shape and a speaker system image indicating the speaker system arranged within the room image;
wherein preferably the display unit displays a line extending to a front direction of the speaker system image.

3. The beam direction setting device according to claim 1, wherein the display unit displays a semicircular shape formed with the speaker system as a center thereof.

4. The beam direction setting device according to claim 2, wherein the information indicating the beam direction indicates an angle of the listening position image relative to a center line extending to a front direction from a center of the speaker system image;
wherein preferably the display unit displays the angle.

5. The beam direction setting device according to any one of claims 1 to 4, wherein the display unit and the reception unit are formed as a touch panel.

6. The beam direction setting device according to any one of claims 1 to 5, wherein:
the acquisition unit acquires information based on a distance between the listening position received by the reception unit and the position of the speaker system displayed on the display unit; and
the display unit displays the information based on the distance between the listening position and the speaker system.

7. The beam direction setting device according to any one of claims 1 to 6, wherein:
the reception unit receives the designation of a plurality of listening positions;
the acquisition unit acquires the information indicating the beam direction for each of the received plurality of listening positions; and
the display unit displays each of the plurality of listening positions and the beam directions.

8. A beam direction setting system, comprising:
a speaker system; and
a beam direction setting device,
wherein the speaker system comprises:
a communication unit configured to communicate with the beam direction setting device;
a speaker array including a plurality of speakers; and
a processing unit configured to cause the speaker array to output a sound converted into a beam,
wherein the beam direction setting device comprises:
a communication unit configured to communicate with the speaker system;
a display unit configured to display a position of the speaker system;
a reception unit configured to receive a designation of a listening position relative to the speaker system; and
an acquisition unit configured to acquire information indicating a beam direction based on a relationship between the listening position received by the reception unit and the position of the speaker system displayed on the display unit,
wherein the display unit further displays the listening position and the beam direction, and
wherein the processing unit of the speaker system sets a direction of the beam output by the speaker array based on the information indicating the beam direction.

9. The beam direction setting system according to claim 8, wherein the display unit displays a listening position image indicating the listening position and a beam direction image indicating the beam direction so as to be superimposed on a room image indicating a room having a square shape and a speaker system image indicating the speaker system arranged within the room image;
wherein preferably the display unit displays a line extending to a front direction of the speaker system image.

10. The beam direction setting system according to claim 8, wherein the display unit displays a semicircular shape formed with the speaker system as a center thereof.

11. The beam direction setting system according to claim 9, wherein the information indicating the beam direction indicates an angle of the listening position image relative to a center line extending to a front direction from a center of the speaker system image;
wherein preferably the display unit displays the angle.

12. The beam direction setting system according to any one of claims 8 to 11, wherein:
the acquisition unit acquires information based on a distance between the listening position received by the reception unit and the position of the speaker system displayed on the display unit; and
the processing unit sets a volume of the beam based on the information based on the distance.

13. The beam direction setting system according to any one of claims 8 to 12, wherein:
the acquisition unit acquires information based on a distance between the listening position received by the reception unit and the position of the speaker system displayed on the display unit; and
the processing unit sets a focal point of the beambased on the information based on the distance.

14. The beam direction setting system according to any one of claims 8 to 13, wherein:
the reception unit receives the designation of a plurality of listening positions; and
the acquisition unit acquires the information indicating the beam direction for each of the received plurality of listening positions;
the display unit displays each of the plurality of listening positions and the beam directions; and
the processing unit causes the speaker array to output a plurality of beams, and sets the direction of each of the plurality of beams based on the information indicating each of the beam directions.

15. The beam direction setting system according to any one of claims 8 to 14, wherein:
the speaker system comprises a mixing unit configured to mix audio signals for a plurality of channels; and
the processing unit causes the speaker array to output the beam by supplying the audio signals mixed by the mixing unit to each of the plurality of speakers.
